# EUROPEAN PATENT APPLICATION

(11) **EP 4 147 914 A1**
(43) Date of publication of application: **15.03.2023**
(21) Application number: 22194996.9
(22) Date of filing: 10.09.2022
(51) Int. Cl.: B60R 9/042, B60R 9/048

(54) **LADDER-RACK**

(30) Priority: 13.09.2021 IT 202100023594
(71) Applicant: Baggio & de Sordi S.r.l., 31070 Giavera del Montello TV (IT)
(72) Inventor: DE SORDI, FEDERICO, 31070 Giavera del Montello (TV) (IT)
(74) Representative: Citron, Massimiliano

(57) **Abstract**

A ladder-rack (MC), mountable or mounted on the roof of a vehicle (V), is described. The ladder-rack comprises a ladder (S), a fixed linear guide (10) adapted for mounting on the vehicle roof, a support (12) for the ladder mounted horizontally translatable in relation to the linear guide, so as to support the ladder and move it beyond the edge of the roof, and a slide (20) which is mounted at one end of the linear guide in a swinging manner about a, in use, horizontal axis and connected slidingly with the support for tilting it in order to tilt the ladder towards the ground.

To protect the ladder there is a covering canopy (52, 54) configured to create a tunnel above the linear guide in which the ladder can be sheltered.

## Description

The invention relates - in general - to a ladder-rack for the roof of a vehicle for supporting a ladder on the roof of the vehicle. The ladder-rack acts to support a ladder or packed ladder segments.

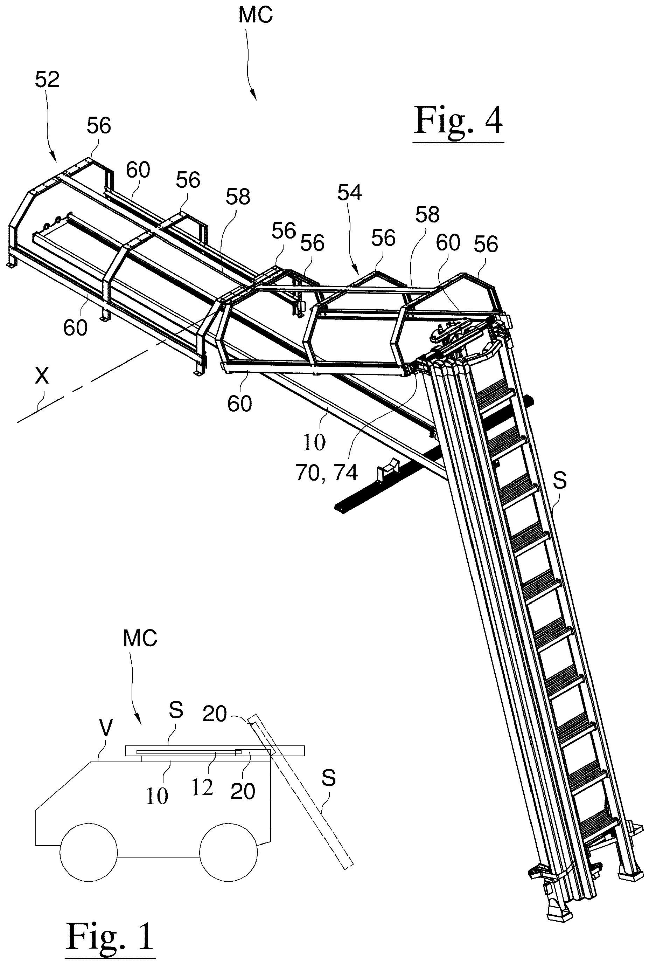

Known ladder-racks (see Fig. 1) are used to transport a ladder on the roof of vehicles as necessary equipment for electricians, maintenance workers, or firefighters. The ladder consists of one or more packed segments, which e.g. can move telescopically to form a longer ladder. At rest the segments are all horizontal and packed on top of each other above the roof of the vehicle, while when needed the ladder-rack allows the pack of segments to be moved from the roof to the ground and rotated to put them almost vertical, after which the operator can detach them from the vehicle.

While moving the vehicle or during periods of inactivity, the ladder is always exposed to the weather. It can then wear, or simply over time can become unacceptably dirty.

It is desired to remedy at least one of the above problems with a ladder-rack as in the attached claims, wherein the dependent ones define beneficial variants.

A ladder-rack, mountable or mounted on the roof of a vehicle, is proposed, comprising:
a ladder,
a linear guide adapted for mounting on the roof of the vehicle,
a ladder support mounted translatable horizontally relative to the linear guide, so as to support the ladder and translate it beyond the edge of the roof,
a slide that is mounted at one end of the linear guide in an swinging manner about a - in use - horizontal axis and connected slidingly with the support to tilt it in order to tilt the ladder towards the ground,
a covering canopy configured to create a tunnel above the linear guide in which the ladder can be sheltered.

The covering canopy protects the ladder and the ladder-rack from dirt and dust, and can be easily replaced without disassembling the ladder-rack.

The covering canopy may be integral to the linear guide and/or the roof of the vehicle.

The linear guide may be oriented to lower the ladder at the back of the vehicle or at the side of the vehicle.

Preferably, said ladder consists of a stack of overlapping ladder segments that are joinable to form a longer ladder.

The covering canopy may be made of a variety of materials, e.g. with a flexible (e.g. plastic) tarpaulin or with rigid plates or pieces. In the former case preferably the canopy comprises centerings on which a tarpaulin or rigid cover plates are laid.

Preferably the canopy comprises two parts interconnected to each other,
a first part integral to the linear guide and/or the roof of the vehicle, and
a second part that is the one closest to the edge, e.g. the rear edge, of the roof and is mounted movable relative to the first part.

Thus the canopy can deform so that it does not hinder the downward movement of the ladder when the ladder tilts toward the ground. In fact, when the ladder tilts, it might bump against the canopy.

In a preferred variant, the second part is placed close to the rear edge of the roof, and the first part is placed close to the front edge of the roof (to bring down the ladder at the rear of the vehicle). Or the second part is placed near a side edge of the roof, and the first part is placed in the middle of the roof or near the opposite side edge of the roof (to bring down the ladder at the side of the vehicle).

The two parts can be connected in various ways.

In a preferred variant, the second part is hinged to the first part about a hinging axis that can be (in use) horizontal or vertical. With a horizontal hinging axis, the second part can be raised relative to the vehicle roof; with a vertical hinging axis, the second part can be moved laterally relative to the first part (and to the vehicle roof).

In a more preferred variant, the first and/or second parts comprise a track in which one or more casters pivoted on the support can slide by rolling. In this way, the support can translate while resting on a rail obtained in the canopy, thereby improving the stability of the ladder-rack.

In an even more preferred variant, the first part comprises a first track and the second part comprises a second track, the first and second parts being configured so that when the first and second parts are aligned horizontally the first and second track are aligned horizontally and form an overall track.

In a variant, said two parts consist of a frame formed of centerings parallel to each other and kept rigidly integral to each other by joining bars between the centerings. In this variant, said track is, for example, obtained in the joining bars, e.g. as a linear recess.

In a variant, the ladder-rack comprises means for synchronizing the movement of the second part with the tilting movement of the support.

Another aspect of the invention involves a vehicle equipped with the aforementioned ladder-rack.

The advantages of the invention will be clearer from the following description of a preferred embodiment of a ladder-rack, reference making to the attached drawing in which
- Fig. 1 shows a schematic view of a vehicle equipped with a ladder-rack;
- Figs. 2-4 show a three-dimensional view of the ladder-rack in different configurations;
- Fig. 5 shows a side view of the ladder-rack corresponding to Fig. 4.

In the figures equal numbers indicate equal or conceptually similar parts.

Fig. 1 shows a ladder S mounted on a ladder-rack MC placed on the roof of a vehicle V. For example, the ladder S consists of one or more packed ladder segments that can move telescopically to form a longer ladder.

On the roof of the vehicle V there are mounted parallel rails 10, at one end of which (at the end closest to the rear of the vehicle) is mounted a tilting slide or saddle 20. The slide or saddle 20 is hinged to the rails 10 about a horizontal axis so that it can tilt with respect to the rails 10.

A support 12, on which the ladder S rests, is slidingly coupled, e.g. with casters, to the slide or saddle 20, so that it can slide linearly relative to the slide or saddle 20 (and to the rails 10) without coming off and with a linear stroke. The support 12 is preferably also configured to slide linearly on the rails 10 by resting on them, e.g. by means of casters.

At rest, the ladder S is horizontal and on top of the roof of the vehicle V lying on the support 12. If the ladder S has multiple ladder segments, they remain packed on top of each other above the roof of the vehicle V.

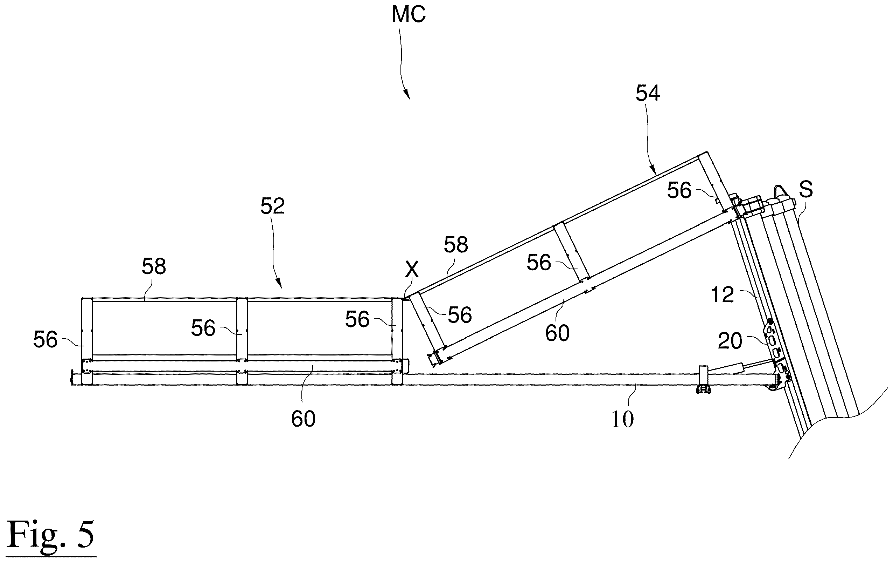

If necessary (see hatching in Figs. 1 and 4), the support 12 with the ladder S on it can be moved toward the rear of the vehicle V to protrude from the rear of the vehicle V. In particular, the linear stroke of the support 12 is such that the end of the support 12 opposite to the slide 20 can translate as far as the slide 20 itself (see also Fig. 5). By doing so, the ladder S translates past the roof of the vehicle V and protrudes cantilevered from it. When the end of the support 12 comes at the slide 20, the relative sliding between the support 12 and the slide 20 ends and they become temporarily integral with each other. After that, the slide 20 and the support 12 can tilt together, thereby tilting the ladder S along with them (see dashed position in Fig. 1).

The rotation of the slide 20 is done manually or by a drive, e.g. an electric or pneumatic drive.

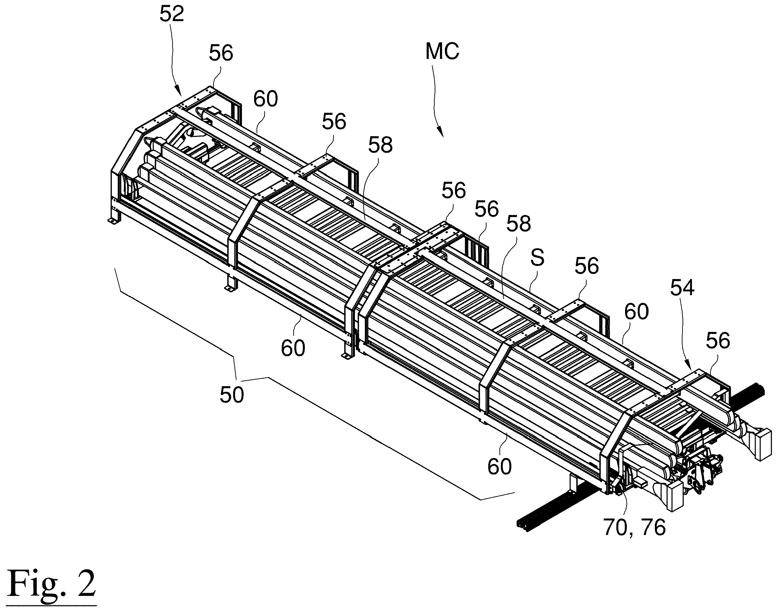

Figs. 2-5 show an improved ladder-rack MC in detail.

The ladder-rack MC follows the general scheme in Fig. 1, and comprises: a ladder S consisting of e.g. one or more packed ladder segments, the parallel rails 10 mounted on the roof of the vehicle V, the support 12, and the tilting slide 20.

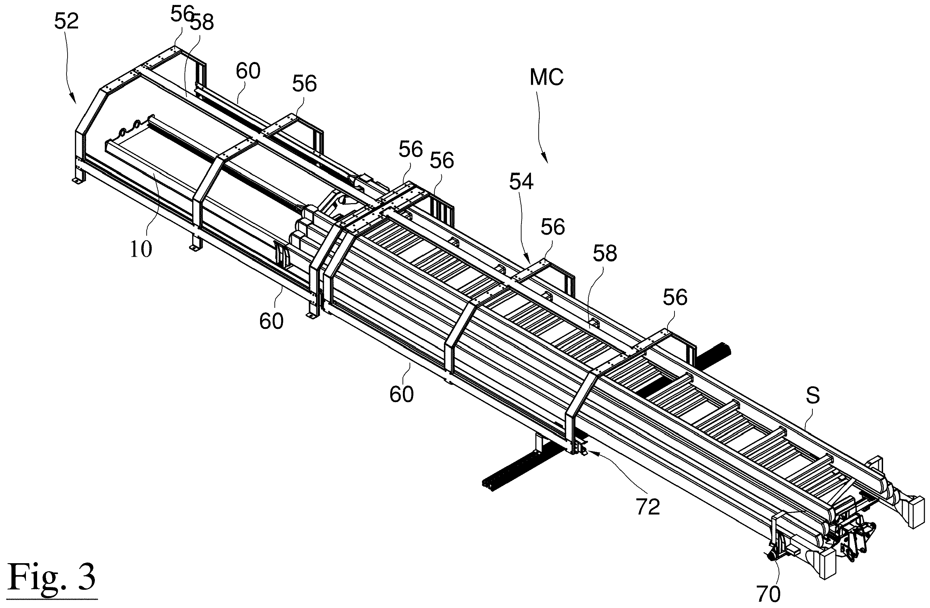

The general operation of the ladder-rack MC is as described for Fig. 1. Fig. 2 shows the ladder-rack MC at rest, Fig. 3 shows the ladder-rack MC with the support 12 partially translated towards the slide 20, Fig. 4 shows the ladder-rack MC with the ladder S tilted.

The ladder-rack MC comprises a covering canopy 50 integral with the rails 10 and conformed to create, above the vehicle V, a tunnel inside which to shelter, at rest, the ladder S, the slide 20 and the support 12.

The canopy 50 in the example shown consists of two juxtaposed parts 52, 54. We denote by 54 the part closest to the rear of the vehicle V, and by 52 the part located at about the middle of the roof of the vehicle V or closest to the driver's cab.

Each part 52, 54, but not necessarily, consists of a frame or lattice formed by centerings or arches 56 lying in planes which are parallel to each other and vertical in use (see Fig. 2). The centerings or arches 56 are held rigidly together by (horizontal) joining bars 58. The centerings or arches 56 and the bars 58 together form a cage that acts as a skeleton to support covering elements, such as a tarpaulin or rigid panels (not shown). However, each part 52, 54, or the overall canopy 50 need not be necessarily constructed with a frame (as in the figures) whose openings are then closed; instead e.g. one or more rigid canopies, e.g. made of plastic, can be used to uniformly cover the ladder S and the support 12.

Two bars 58 of each part 52, 54, e.g. those on the side and indicated with 60, each comprise a linear track, e.g. obtained as a groove or recess.

When the parts 52, 54 are in the rest position (fig. 2, complete tunnel) the respective linear tracks are aligned to form an overall track 72 (fig. 3), so that in such overall track one or more casters 70 pivoted on the support 12 can roll.

Preferably the parts 52, 54 are interconnected so that the part 54 can move relative to the part 52, which remains fixed on the rails 10.

In the example shown, the part 54 is hinged to the part 52 about a horizontal axis X (see Fig. 4). The center of a centering 56 of the part 54 is hinged to the center of a centering 56 of the part 52. The articulation between the parts 52, 54 allows the part 54 to raise when the ladder S has to tilt toward the ground, facilitating the maneuver of lowering the ladder S and/or avoiding accidental collisions with e.g. the support 12 during such maneuver.

The parts 52, 54 can also be moved relatively in a different manner; e.g. by relative translation, if e.g. the part 54 translates vertically relative to the part 52, or via a different axis of rotation, if e.g. the part 54 rotates relative to the part 52 about a vertical axis; or about a horizontal axis parallel to the stroke of the support 12, a case wherein the part 54 tilts on its own side (e.g. with rotation axis coincident with a bar 60).

The relative displacement between the parts 52, 54 can be done manually or by a dedicated drive, e.g. an electric motor or a linear actuator.

It is convenient to equip the ladder-rack MC with means for synchronizing the movement of the part 54 with the tilting movement of the support 12.

In the example shown, advantageously, the relative movement between the parts 52, 54 occurs automatically due to the engagement between the casters 70 and the linear track 72. When the slide 20 tilts together with the support 12, the casters 70 push the part 54 up, and vice versa they lower it when the slide 20 returns horizontal to bring the ladder S back to the roof of the vehicle V. Therefore the movement of the part 54 is synchronized with - and by - that of the support 12 with ladder S on it.

The casters 70 can be mounted e.g. at one or each end of the support 12. In the second case, we denote by 74 the casters mounted at the front end (relative to vehicle V) of the support 12 (Fig. 4) and by 76 the casters mounted at the rear end of the support 12 (Fig. 2). The casters 74, as mentioned above, can lift the part 54. The casters 76, by inserting into the track of the part 54 when the ladder S is at rest above the vehicle V (see fig. 2), can lock the part 54 while keeping it in alignment with the part 52

## Claims

1. Ladder-rack (MC), mountable or mounted on the roof of a vehicle (V), comprising:
a ladder (S),
a fixed linear guide (10) adapted for mounting on the vehicle roof,
a support (12) for the ladder mounted horizontally translatable in relation to the linear guide, so as to support the ladder and move it beyond the edge of the roof,
a slide (20) which is mounted at one end of the linear guide in a swinging manner about a, in use, horizontal axis and connected slidingly with the support for tilting it in order to tilt the ladder towards the ground,
a covering canopy (52, 54) configured to create a tunnel above the linear guide in which the ladder can be sheltered.

2. Ladder-rack (MC) according to claim 1, wherein the canopy comprises centerings (56) on which a tarpaulin or rigid cover plates can be laid.

3. Ladder-rack (MC) according to any preceding claim, wherein the canopy comprises two parts (52, 54) connected to each other,
a first part (52) integral with the linear guide and/or the roof of the vehicle, and
a second part (54) which is the one closest to the edge of the roof and is mounted movable with respect to the first part.

4. Ladder-rack (MC) according to claim 3, wherein the second part is positioned close to the rear edge of the roof, and the first part is positioned close to the front edge of the roof.

5. Ladder-rack (MC) according to claim 3 or 4, wherein the second part is hinged to the first part about a hinging axis which is horizontal or vertical in use.

6. Ladder-rack (MC) according to claim 3 or 4 or 5, wherein the first and/or second parts comprise a track (72) in which one or more casters (70) pivoted on the support (12) can slide by rolling.

7. Ladder-rack (MC) according to claim 3 or 4 or 5 or 6, wherein the first part comprises a first track and the second part comprises a second track, the first and second parts being configured such that when they are horizontally aligned the first and second track are horizontally aligned and form an overall track (70).

8. Ladder-rack (MC) according to claim 3 or 4 or 5 or 6 or 7, wherein said two parts comprise a frame formed by centerings (56) parallel to each other and kept rigidly integral to each other by connecting bars (58) between the centerings.

9. Ladder-rack (MC) according to any one of the preceding claims 3 to 8, comprising means for synchronizing the movement of the second part with a tilting movement of the support (12).

10. Vehicle equipped with a ladder-rack as in any one of the preceding claims.
